# NEW EUROPEAN PATENT SPECIFICATION

(11) **EP 0 486 150 B2**
(45) Date of publication and mention of the opposition decision: **28.06.2000**
(45) Mention of the grant of the patent: 20.12.1995
(21) Application number: 91309060.1
(22) Date of filing: 03.10.1991
(51) Int. Cl.: F16J 15/08

(54) **Steel laminate gasket with seal protecting member**
Geschichtete Stahlblechabdichtung mit Schutzteil
Joint d'étanchéité en acier laminé avec élément de protection

(30) Priority: 13.11.1990 US 611703
(43) Date of publication of application: 20.05.1992
(73) Proprietor: ISHIKAWA GASKET CO. LTD., Tokyo (JP)
(72) Inventor: Udagawa, Tsunekazu, Ichikawa-shi (JP)
(74) Representative: Goddard, David John

(56) References cited:
- EP-A- 0 385 699
- CA-A- 977 382
- DE-C- 3 844 880
- FR-A- 2 176 450
- JP-A- 267 162
- JP-A- 291 266
- JP-U- 1 116 265
- JP-U- 1 124 466
- JP-U- 1 157 257
- JP-U- 6 135 266
- US-A- 3 352 564
- US-A- 4 759 556
- US-A- 4 759 585
- US-A- 4 807 892
- US-A- 4 834 399
- US-A- 5 004 250

## Description

### Background of the Invention and Related Art Statement

The present invention relates to a steel laminate gasket with a seal protecting member near the outer periphery of the gasket.

A gasket is installed between two engine parts to seal therebetween. In order to securely seal around a hole of the engine parts, the gasket is provided with sealing means around the hole, which provides high surface pressure when the gasket is tightened.

When an engine is operated, the engine together with the gasket vibrates, wherein the vibration is especially severe at a periphery of the gasket. Especially, a cylinder head gasket receives a severe vibration at the periphery thereof.

When the gasket vibrates, sealing pressure applied against the sealing means around the hole changes repeatedly. As a result, when the gasket is used for a long period of time, creep relaxation occurs at the sealing means. Also, when coatings are formed on the plates, the coatings may break or gradually flow outwardly by the vibration of the gasket.

In Japanese Utility Model Applications No. 63-12261, No. 63-20827 and No. 63-53125, it was proposed that at least one protecting plate is formed at an edge portion of a gasket near a hole to be sealed, so that vibration of the gasket is reduced. In these inventions, vibration of the gasket is properly reduced, but it requires additional plates.

EP-A-385 699 describes a metal laminate gasket having multiple concentric beads for sealing around holes, the gasket operates as intended, However, the gasket described is not adapted to deal with high vibration levels and consequent creep relaxation of the sealing beads.

JP-A-2-67162 describes a gasket having a sealing bead around the entire gasket peripheral edge. However, it is not possible to exercise local, controlled pressure with respect to a fluid hole between the cylinder bore and the gasket.

US-A-4 759 556 describes a gasket wherein bead portions remote from tightening bolt holes have a supporting bead which merges back into the main bead to equalise pressure.

Accordingly, one object of the present invention is to provide a steel laminate gasket, in which sealing means around a hole is protected from vibration of the gasket.

Another object of the invention is to provide a steel laminate gasket as stated above, wherein creep relaxation of the sealing means is substantially prevented.

A further object of the invention is to provide a steel laminate gasket as stated above, wherein the flow of the seal coating formed on a gasket is substantially prevented.

A still further object of the invention is to provide a steel laminate gasket as stated above, which can be easily and economically manufactured.

Further objects and advantages of the invention will be apparent from the following description of the invention.

### Summary of the Invention

In accordance with the present invention there is provided a steel laminate gasket for an internal combustion engine having a plurality of cylinder bores and at least one fluid hole therein, comprising, a plurality of plates for constituting the steel laminate gasket, each plate having first holes corresponding to the cylinder bores and at least one second hole corresponding to the fluid hole of the engine, said second hole being located between the first hole and a gasket edge portion and means for sealing around the fluid hole of the engine, said sealing means entirely surrounding the fluid hole,
a supporting bead situated between the gasket edge portion and the sealing means facing the gasket edge portion, said supporting bead being integrally formed on one of the plates,
said supporting bead operating as a bead which is effective for only partly supporting the sealing means and which extends only partly around the sealing means without extending around the entire edge of the gasket, said supporting bead being located separately and curving generally along the sealing means at a predetermined distance away from both the sealing means and the gasket edge portion so that when the gasket is tightened, the supporting bead receives a part of the tightening pressure applied to the sealing means and provides surface pressure higher than the surface pressure of the sealing means, the higher surface pressure being achieved by virtue of the supporting bead having a characteristic selected from at least one of: the supporting bead being higher than the sealing means; being formed on a plate which is thicker than the plate containing the sealing means; and, being formed on a plate which is harder than the plate containing the sealing means so as to protect the sealing means against creep relaxation.

As a result, the vibration of the gasket at the gasket edge portion is partly supported by the supporting means to thereby protect the gasket. Consequently, creep relaxation of the sealing means is substantially prevented or reduced. Also, in case seal coatings are formed on outer surfaces or between the plates, the seal coatings on and around the sealing means do not flow outwardly. Leakage of fluid around the fluid hole is substantially prevented.

The supporting means is a bead, which provides surface pressure higher than the surface pressure of the sealing means when the gasket is tightened. Also, the sealing means may be a bead integrally formed on one of the plates. Further, the bead for the supporting means is curved along the bead of the sealing means. The beads for the supporting means and the sealing means may be formed on the same plate or different plates.

### Brief Description of the Drawings

Fig. 1 is a partial plan view of a first embodiment of a steel laminate gasket of the invention;
Fig. 2A is an enlarged perspective section view taken along line 2-2 in Fig. 1;
Fig. 2B is a perspective section view similar to Fig. 2A;
Fig. 3 is an explanatory section view for showing a compressed condition of a gasket; and
Fig. 4 is an enlarged perspective section view, similar to Fig. 2A, for showing a second embodiment of a steel laminate gasket of the invention.

### Detailed Description of Preferred Embodiments

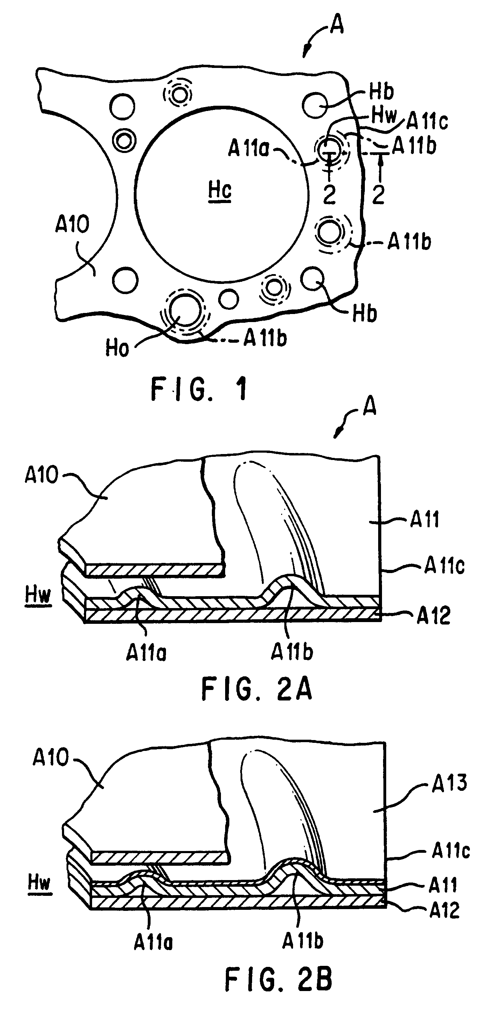

Referring to Figs. 1 and 2A, a first embodiment A of a steel laminate gasket of the present invention is shown. The gasket A is a cylinder head gasket and includes cylinder holes Hc, water holes Hw, oil holes Ho, bolt holes Hb and so on, as in the conventional gasket.

In the gasket A, areas around the cylinder holes Hc are sealed by appropriate sealing means. However, since the sealing means for the cylinder holes Hc is not the subject matter of the present invention, the sealing means for the cylinder holes Hc is not explained. Any sealing means may be used for the cylinder holes Hc.

Also, in the embodiments explained herein below, areas around the water holes Hw and oil holes Ho are sealed by beads. The beads are preferable, but it is possible to use any other sealing means around the water hole Hw and oil holes Ho.

As shown in Fig. 2A, the gasket A comprises an upper plate A10, a middle plate A11 and a lower plate A12, which have the same configuration and extend over the entire area of the gasket A. The middle plate A11 is situated between the upper and lower plates A10, A12 and includes a bead A11a around the water hole Hw to seal therearound.

The middle plate A11 further includes a bead A11b situated between the bead A11a and an edge A11c. The bead A11b curves generally along the bead A11a and is partly formed outside the bead A11a facing the edge A11c. The height of the bead A11b is higher than that of the bead A11a to provide surface pressure greater than that of the bead A11a when the gasket A is tightened.

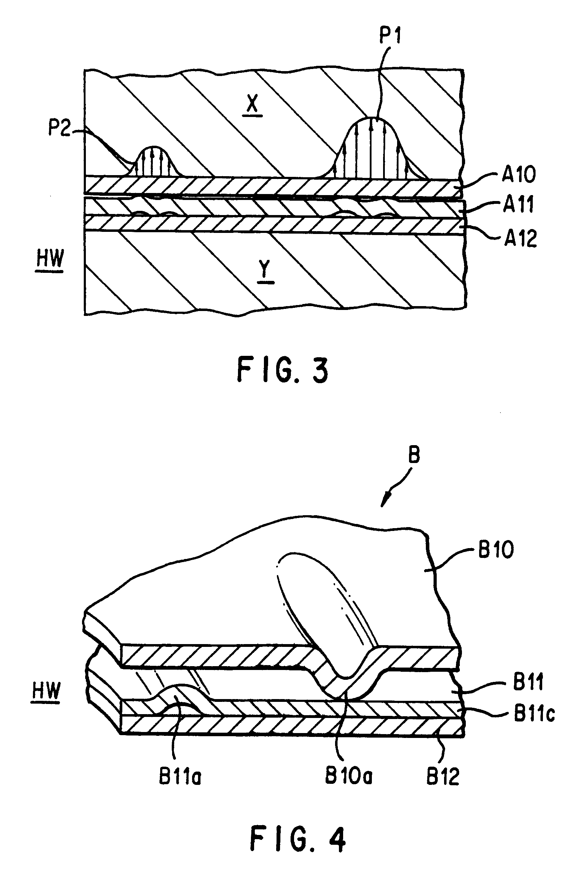

As clearly shown in Fig. 3, when the gasket A is situated between a cylinder head X and a cylinder block Y and is tightened, the beads A11a, A11b are compressed. The bead A11a seals around the water hole Hw, and the bead A11b partly supports the bead A11a. The bead A11b provides surface pressure P₁ higher than surface pressure P₂ of the bead A11a. As a result, a part of the bead A11a near the bead A11b or near the edge A11c is supported by the bead A11b.

When the engine is actuated, the engine vibrates. Especially, the edge portions of a cylinder head gasket vibrate severely. As a result of the vibration, the sealing means near the edge portions of the cylinder head gasket is weakened. Further, since high temperature is applied to the cylinder head gasket, the cylinder head gasket is liable to be damaged. Especially, in case seal coatings are formed on or between the plates, the seal coatings on or around the sealing means may break or flow outwardly by the vibration and high temperature.

In the present invention, the bead A11b is formed between the edge A11c and bead A11a, and supports a part of the tightening pressure applied to the bead A11a. Therefore, even if the gasket A is used for a long time, the bead A11a is not substantially damaged by the vibration of the engine. Namely, creep relaxation of the bead A11a is substantially prevented. Further, as shown in Fig. 2B, in case a seal coating A13 is formed on or around the bead A11a, the seal coating may not break or flow outside the bead A11a. Even if the seal coating flows from the bead A11a, the bead A11b prevents the flow of the seal coating beyond the same. Accordingly, sealing around the water hole Hw can be securely made.

Fig. 4 shows a second embodiment B of a steel laminate gasket of the invention. The gasket B comprises an upper plate B10, a middle plate B11 with a bead B11a, and a lower plate B12, as in the gasket A. However, in the gasket B, the middle plate B11 does not have a bead between an edge B11c and the bead B11a. Instead, the plate B10 is provided with a bead B10a, which is located between the edge B11c and the bead B11a when the gasket B is assembled. The bead B10a partly curves along the bead B11a.

The height of the bead B10a is higher than the height of the bead B11a, and the thickness of the plate B10 is thicker than the plate B11, so that when the gasket B is tightened, the bead B10a provides surface pressure higher than that of the bead B11a. Therefore, the bead B10a partly supports tightening pressure applied to the bead B11a to thereby protect the bead B11a. The hardness of the plate B10 may be greater than the plate B11. The gasket B operates as in the gasket A.

In the present invention, the supporting means is situated near the sealing means at a predetermined distance away from the gasket edge portion. Therefore, when the engine is actuated, vibration of the gasket at the edge portion is significantly reduced. As a result, creep relaxation of the sealing means is substantially prevented. In case the seal coatings are formed on or between the plates, the seal coatings on or around the sealing means do not break or flow outwardly by the vibration of the gasket. Especially, the seal coatings do not flow beyond the supporting means.

While the invention has been explained with reference to the specific embodiments of the invention, the explanation is illustrative and the invention is limited only by the appended claims.

## Claims

1. A steel laminate gasket (A;B) for an internal combustion engine having a plurality of cylinder bores (Hc) and at least one fluid hole (Hw) therein, comprising:
a plurality of plates (A10,A11,A12;B10,B11,B12) for constituting the steel laminate gasket, each plate having first holes corresponding to the cylinder bores (Hc) and at least one second hole corresponding to the fluid hole (Hw) of the engine, said second hole being located between the first hole and a gasket edge portion (A11c; B11c),
means (A11a;B11a) for sealing around the fluid hole of the engine, said sealing means entirely surrounding the fluid hole, and
a supporting bead (A11b;B10a) situated between the gasket edge portion (A11c;B11c) and the sealing means facing the gasket edge portion, said supporting bead being integrally formed on one of the plates,
said supporting bead (A11b; B10a) operating as a bead which is effective for only partly supporting the sealing means (A11a;B11a) and which extends only partly around the sealing means (A11a;B11a) without extending around the entire edge of the gasket, said supporting bead being located separately and curving generally along the sealing means at a predetermined distance away from both the sealing means and the gasket edge portion so that when the gasket is tightened, the supporting bead receives a part of the tightening pressure applied to the sealing means and provides surface pressure higher than the surface pressure of the sealing means, the higher surface pressure being achieved by virtue of the supporting bead having a characteristic selected from at least one of: the supporting bead being higher (A11b;B10a) than the sealing means; being formed on a plate (B10) which is thicker than the plate (B11) containing the sealing means; and, being formed on a plate (B10) which is harder than the plate (B11) containing the sealing means so as to protect the sealing means against creep relaxation.

2. A steel laminate gasket according to claim 1, characterised in that said sealing means is a bead (A11a;B11a) integrally formed on one of the plates (A11;B11) for constituting the steel laminate gasket.

3. A steel laminate gasket according to either claim 1 or claim 2, characterised in that said supporting bead (A11b) is formed on the same plate (A11) as the bead for sealing means (A11a).

4. A steel laminate gasket according to claim 1, characterised by further comprising means (A13) for preventing fluid from flowing through the plates and formed between the plates, wherein said supporting bead (A11b), when said fluid flow preventing means (A13) formed between the plates flows toward the gasket edge portion, prevents the flow of the fluid flow preventing means (A13) from flowing beyond the supporting bead (A11b) to securely seal around the fluid hole.

## Patentansprüche

1. Stahl-Laminatdichtung (A; B) für eine Brennkraftmaschine, die eine Vielzahl von Zylinderbohrungen (Hc) und wenigstens eine Fluidöffnung (Hw) darin aufweist, dadurch **gekennzeichnet,**
daß eine Vielzahl von Platten (A10, A11, A12; B10, B11, B12) zur Bildung einer Stahl-Laminatdichtung vorgesehen ist, daß jede Platte erste Öffnungen aufweist, welche den Zylinderbohrungen (Hc) entsprechen, und wenigstens eine zweite Öffnung hat, welche der Fluidöffnung (Hw) der Maschine entspricht, daß die zweite Öffnung zwischen der ersten Öffnung und einem Dichtungsrandbereich (A11c; B11c) angeordnet ist,
daß weiterhin eine Einrichtung (A11a; B11a) vorhanden ist, um eine Abdichtung um die Fluidöffnung der Maschine herum zu gewährleisten, daß die Dichtungseinrichtung die Fluidöffnung vollständig umgibt,
daß eine Abstützungs-Sicke (A11b; B10a) zwischen dem Dichtungsrandbereich (A11c; B11c) und der Dichtungseinrichtung angeordnet ist, welche dem Dichtungsrandbereich zugewandt ist, wobei die Abstützungs-Sicke an eine der Platten einstückig angeformt ist,
daß die Abstützungs-Sicke (A11b; B10a) als eine Sicke arbeitet, mit der Wirkung, daß die Dichtungseinrichtung (A11a; B11a) nur zum Teil getragen wird, daß sich die Abstützungs-Sicke (A11b; B11a) nur teilweise um die Dichtungseinrichtung (A11a; B11a) herum erstreckt, ohne sich um den gesamten Rand der Dichtung herum auszudehnen, daß die genannte Abstützungs-Sicke separat angeordnet ist und allgemein kurvenförmig entlang der Dichtungseinrichtung auf einem vorgegebenen Abstand von der Dichtungseinrichtung einerseits und dem Dichtungsrandbereich andererseits verläuft, so daß dann, wenn die Dichtung eingespannt ist, die Abstützungs-Sicke einen Teil des Abstützungsdruckes trägt, welcher auf die Dichtungseinrichtung wirkt, und einen Oberflächendruck liefert, welcher größer ist als der Oberflächendruck der Dichtungseinrichtung, wobei der größere Oberflächendruck aufgrund der Abstützungs-Sicke erreicht wird, welche wenigstens eine Eigenschaft aufweist, die unter folgenden Eigenschaften auszuwählen ist: die Abstützungs-Sicke ist höher (A11b; B10a) als die Dichtungseinrichtung; sie ist auf einer Platte (B10) ausgebildet, die dicker ist als die Platte (B11), welche die Dichtungseinrichtung aufweist; und sie ist auf einer Platte (B10) ausgebildet, welche härter ist als die Platte (B11), welche die Dichtungseinrichtung aufweist, so daß die Dichtungseinrichtung gegen eine Kriech-Relaxation geschützt ist.

2. Stahl-Laminatdichtung nach Anspruch 1, dadurch **gekennzeichnet,** daß die Dichtungseinrichtung eine Sicke (A11a; B11a) ist, welche einstückig an eine der Platten (A11; B11) angeformt ist, um die Stahl-Laminatdichtung zu bilden.

3. Stahl-Laminatdichtung nach Anspruch 1 oder 2, dadurch **gekennzeichnet,** daß die Abstützungs-Sicke (A11b) auf derselben Platte (A11) wie die Sicke für die Dichtungseinrichtung (A11a) ausgebildet ist.

4. Stahl-Laminatdichtung nach Anspruch 1, dadurch **gekennzeichnet,** daß weiterhin eine Einrichtung (A13) vorhanden ist, welche dazu dient, Fluid daran zu hindern, durch die Platten zu strömen, wobei diese Einrichtung zwischen den Platten angeordnet ist, und daß die Abstützungs-Sicke (A11b) dann, wenn die Einrichtung (A13) zur Verhinderung der Fluidströmung, welche zwischen den Platten ausgebildet ist, in Richtung auf den Dichtungsrandbereich fließt, die Einrichtung (A13) zur Verhinderung der Fluidströmung daran hindert, in den Bereich jenseits der Abstützungs-Sicke (A11b) zu fließen, um dadurch eine sichere Abdichtung um die Fluidöffnung herum zu gewährleisten.

## Revendications

1. Joint en acier feuilleté (A ; B) pour moteur à combustion interne dans lequel sont formés une pluralité d'orifices de cylindre (Hc) et au moins un orifice à fluide (Hw), comprenant :
une pluralité de plaques (A10, A11, A12 ; B10, B11, B12) constituant le joint en acier feuilleté, chaque plaque ayant des premiers orifices correspondant aux orifices de cylindre (Hc) et au moins un second orifice correspondant à l'orifice à fluide (Hw) du moteur, ledit second orifice étant situé entre le premier orifice et une partie du bord du joint (A11c ; B11c), et
un moyen (A11a ; B11a) pour assurer l'étanchéité autour de l'orifice à fluide du moteur, ledit moyen d'étanchéité entourant complètement l'orifice à fluide, et
un bourrelet (A11b ; B10a) de support placé entre la partie du bord du joint (A11c ; B11c) et le moyen d'étanchéité faisant face à la partie de bord du joint, ledit bourrelet support étant intégralement formé sur une des plaques,
ledit bourrelet de support (A11b ; B10a) fonctionnant en tant que bourrelet qui est capable de supporter uniquement de façon partielle le moyen d'étanchéité (A11a ; B11a) et s'étend seulement de façon partielle autour du moyen d'étanchéité (A11a ; B11a) sans s'étendre autour du bord entier du joint, ledit bourrelet de support étant positionné de façon séparée et substantiellement en courbe le long du moyen d'étanchéité à une distance prédéterminée du moyen d'étanchéité et de la partie de bord du joint, de sorte que lorsque le joint est serré, le bourrelet de support reçoit une partie de la pression de serrage appliquée au moyen d'étanchéité et assure une pression de surface plus élevée que celle du moyen d'étanchéité, la pression de surface plus élevée étant obtenue par le fait que le bourrelet de support comporte une caractéristique sélectionnée parmi au moins une de celles-ci, à savoir : le bourrelet de support est plus haut (A11b ; B10a) que le moyen d'étanchéité ; il est formé sur une plaque (B10) qui est plus épaisse que la plaque (B11) contenant le moyen d'étanchéité ; et il est formé sur une plaque (B10) qui est plus dure que la plaque (B11) contenant le moyen d'étanchéité en sorte de protéger le moyen d'étanchéité contre la relaxation de fluage.

2. Joint en acier feuilleté selon la revendication 1, caractérisé en ce que ledit moyen d'étanchéité est un bourrelet (A11a ; B11a) intégralement formé sur une des plaques (A11 ; B11) formant le joint en acier feuilleté.

3. Joint en acier feuilleté selon l'une quelconque des revendications 1 et 2, caractérisé en ce que ledit bourrelet support (A11b) est formé sur la même plaque (A11) que le bourrelet du moyen d'étanchéité (A11a).

4. Joint en acier feuilleté selon la revendication 1, caractérisé en ce qu'il comprend encore un moyen (A13) destiné à empêcher un fluide de s'écouler à travers les plaques, ce moyen étant formé entre les plaques, dans lequel ledit bourrelet support (A11b), lorsque ledit moyen (A13) formé entre les plaques et empêchant l'écoulement d'un fluide se déplace en direction de la partie de bord du joint, empêche le déplacement du moyen (A13) au-delà du bourrelet support (A11b), pour obtenir une étanchéité sûre autour de l'orifice à fluide.
